# EUROPÄISCHE PATENTSCHRIFT

(11) **EP 0 796 519 B1**
(45) Veröffentlichungstag und Bekanntmachung des Hinweises auf die Patenterteilung: **10.06.1998**
(21) Anmeldenummer: 95934117.3
(22) Anmeldetag: 29.09.1995
(51) Int. Cl.: H02J 13/00, F15B 13/00

(54) **STEUEREINRICHTUNG, INSBESONDERE ZUR ANSTEUERUNG VON VENTILEN**
CONTROL DEVICE, IN PARTICULAR FOR ACTUATING VALVES
DISPOSITIF DE COMMANDE, NOTAMMENT DE COMMANDE DE SOUPAPES

(30) Priorität: 10.12.1994 DE 4444024
(43) Veröffentlichungstag der Anmeldung: 24.09.1997
(73) Patentinhaber: FESTO AG & Co, 73734 Esslingen (DE)
(72) Erfinder: STOLL, Kurt, D-73732 Esslingen (DE); DEMUTH, Stefan-Johannes, D-71726 Benningen (DE); HENZLER, Magnus, D-72663 Grossbettlingen (DE)
(74) Vertreter: Abel, Martin, Dipl.-Ing.
(86) Internationale Anmeldenummer: EP9503854
(87) Internationale Veröffentlichungsnummer: WO9619027

(56) Entgegenhaltungen:
- WO-A-94/24748
- CH-A- 683 021
- DE-A- 4 312 729
- DE-U- 9 214 301
- FR-A- 2 624 627

## Beschreibung

Die Erfindung betrifft eine Steuereinrichtung nach dem Oberbegriff des Anspruchs 1.

Eine Steuereinrichtung dieser Art geht aus der DE-A-4.312.729 A1 hehrvor.

DE-A-3.915.456 offenbart eine Steuereinrichtung zur individuellen Ansteuerung elektromagnetischer Ventile einer Ventilgruppe. Die einzelnen Ventile sind über Ventilstecker an den seriellen Feldbus angeschlossen, wobei in jeden Ventilstecker eine Bus-Kommunikationseinheit integriert ist, so daß jedem Ventil eine eigene derartige Bus-Kommunikationseinheit zugeordnet ist. Die Bus-Kommunikationseinheiten lesen die durch den Feldbus laufenden Signale und schalten bei entsprechender Adressierung das zugeordnete Ventil.

Die bekannte Steuereinrichtung ist zwar verhältnismäßig flexibel einsetzbar. Die große Anzahl erforderlicher Bus-Kommunikationseinheiten führt allerdings zu einer relativ teuren Bauweise. Auch gestaltet sich das Verlegen der Feldbusleitungen recht aufwendig, da jeder Verbraucher unmittelbar angefahren werden muß.

Eine ähnliche Anordnung, bei der die Bus-Kommunkationseinheiten allerdings in die Ventilantriebe integriert sind, geht aus der DE 42 30 414 Al hervor.

Es ist die Aufgabe der vorliegenden Erfindung, eine Steuereinrichtung der eingangs genannten Art zu schaffen, die bei einfacher Installation eine kostengünstige Bauweise ermöglicht. Die Aufgabe wird mit den Merkmalen des Anspruchs 1 gelöst.

Es ist somit möglich, das an dem einen Verbraucher oder Sensor angeordnete Steuermodul gleichzeitig zur Anbindung weiterer Verbraucher und/oder Sensoren zu verwenden, denen somit keine zusätzliche separate Bus-Kommunikationseinheit zugeordnet werden muß. Das Steuermodul mit der Bus-Kommunikationseinheit kann also die zentrale Busstation für gleichzeitig mehrere Verbraucher und/oder Sensoren sein. Ohne nennenswerte Einbußen in der Flexibilität erreicht man damit eine Verringerung der Herstellungskosten. Handelt es sich bei dem Steuermodul um ein Steckerteil, so läßt sich dieses bei einem entsprechenden Anwendungsfalle als Ventilstecker verwenden, wobei die vorhandenen weiteren Verbraucher und/oder Sensoren an diesen Ventilstecker anschließbar sind, so daß sie über dessen zentrale, einer Gruppe von Verbrauchern und/oder Sensoren zugeordnete Bus-Kommunikationseinheit mit dem Feldbus kommunizieren können. Da es sich hierbei erübrigt, sämtliche vorhandenen Verbraucher und/oder Sensoren mit den Feldbusleitungen anzufahren, reduziert sich überdies der Installationsaufwand.

Der Feldbus ist vorzugsweise ein serieller Bus in sogenannter 2-Leiter-Ausführung. Zweckmäßigerweise entspricht der Feldbus der sogenannten ASI-Spezifikation, wobei auch die Bus-Kommunikationseinheit als entsprechend konzipierte ASI-Busstation ausgeführt ist.

In den Unteransprüchen sind zweckmäßige Ausgestaltungen der vorliegenden Erfindung wiedergegeben.

Die an dem Steuermodul vorhandenen Signaleingänge und/ oder Signalausgänge sind zweckmäßigerweise über elektrische Leiter mit externen Anschlußteilen verbunden, die an die in die Schaltung einzubeziehenden Verbraucher und/oder Sensoren anschließbar sind. Ausgezeichnete Flexibilität bei den erforderlichen Verlegearbeiten verspricht hier eine Bauform, bei der die elektrischen Leiter in Kabelform ausgeführt sind. Für spezielle Lösungen kann aber auch vorgesehen sein, eines oder mehrere der vorhandenen Anschlußteile starr mit dem Steuermodul zu verbinden, so daß bei der Montage des Steuermoduls gleichzeitig auch das betreffende Anschlußteil mit dem zugeordneten Verbraucher und/oder Sensor kuppelbar ist.

Zwischen den elektrischen Leitern und den Signaleingängen bzw. Signalausgängen ist eine feste Verdrahtung möglich. Um beispielsweise einen wahlweisen Anschluß unterschiedlich langer elektrischer Leiter zu ermöglichen, kann jedoch auch eine lösbare Verbindung vorgesehen sein, die vorzugsweise von einer Steckkupplungseinrichtung gebildet wird.

Bei einer bevorzugten Ausführungsform wird das Steuermodul auf einem Verbraucher installiert, und zusätzlich zu der dabei verwendeten Kontakteinrichtung sind ausschließlich Signalausgänge vorhanden, die mit weiteren Verbrauchern verbunden sind. Eine solche Anordnung wird vor allem in Zusammenhang mit Ventilbaugruppen eingesetzt.

Das Steuermodul kann in einer weiteren bevorzugten Bauform mit seiner Kontakteinrichtung unmittelbar an einem Sensor angebracht sein, wobei im übrigen nur Signaleingänge vorhanden sind, die mit weiteren Sensoren kommunizieren. Die Sensorsignale werden hier in die Bus-Kommunikationseinheit eingespeist, die sie bei entsprechender Abfrage an den angeschlossenen Feldbus weiterleitet.

In derzeit für optimal gehaltener Ausstattung sind zusätzlich zu der Kontakteinrichtung, die je nach Anbringungsort des Steuermoduls einen Signalausgang oder einen Signaleingang bilden, weitere drei Signaleingänge und/oder Signalausgänge vorhanden, so daß insgesamt vier Anschlußmöglichkeiten bestehen. Eine besonders kompakte Einheit liegt dann vor, wenn das Steuermodul auf einem ersten Verbraucher montiert ist, ein weiterer Signalausgang mit einem weiteren Verbraucher kommuniziert und darüber hinaus weitere zwei Signaleingänge vorhanden sind, die an Sensoren angeschlossen sind, welche ihrerseits an einer Antriebseinrichtung, beispielsweise an einem Linearantrieb, installiert sind. Beim Betrieb der Antriebseinrichtung werden Sensorsignale erzeugt, die zur Ansteuerung der beiden Verbraucher verwendet werden, die ihrerseits eine den Betrieb der Antriebseinrichtung vorgebende Ventilanordnung steuern können.

Nachfolgend wird die Erfindung anhand der beiliegenden Zeichnung näher erläutert. Es zeigen im einzelnen:
- Fig. 1: eine mehrere Steuereinrichtungen der erfindungsgemäßen Art enthaltende Anlage in Feldbus-Anschaltung, wobei strichpunktiert verschiedene Einheiten der Anlage angedeutet sind, die mit unterschiedlich gestalteten Steuereinrichtungen ausgestattet sind, welche im Detail in den weiteren Figuren wiedergegeben sind,
- Fig. 2: die in Fig. 1 markierte Einheit II in detaillierterer Darstellung in Draufsicht,
- Fig. 3: die Anordnung aus Fig. 2 in Seitenansicht mit Blickrichtung gemäß Pfeil III,
- Fig. 4: die in Fig. 1 markierte Einheit IV in detaillierterer Darstellung,
- Fig. 5: die in Fig. 1 markierte Einheit V in detaillierterer Darstellung,
- Fig. 6: die in Fig. 1 markierte Einheit VI in detaillierterer Darstellung und
- Fig. 7: eine weitere vorteilhafte Bauform der Steuereinrichtung.

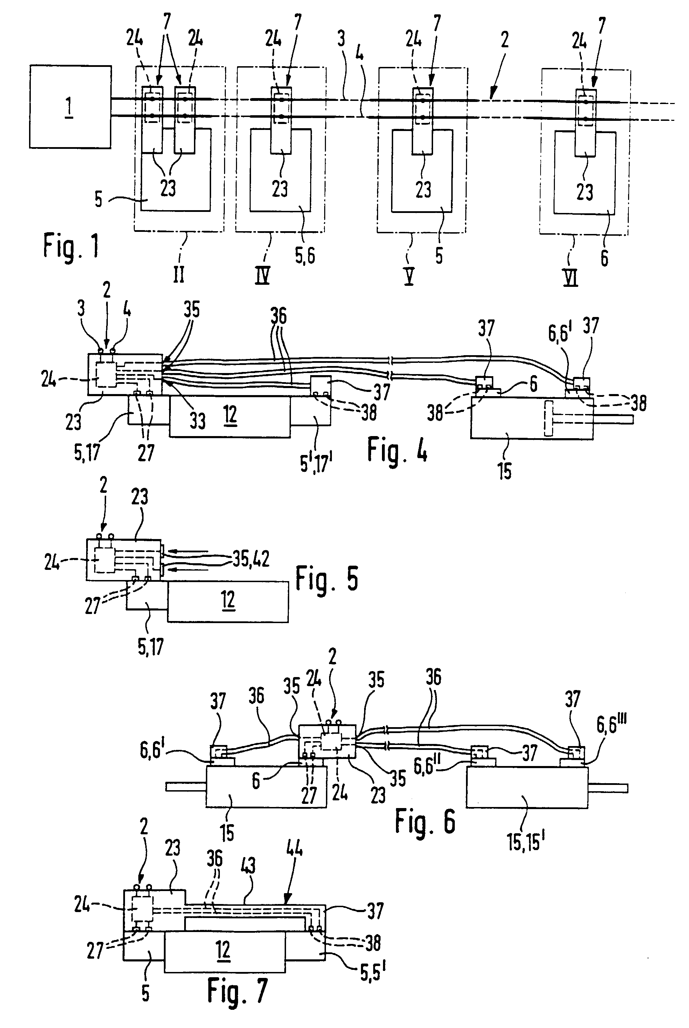

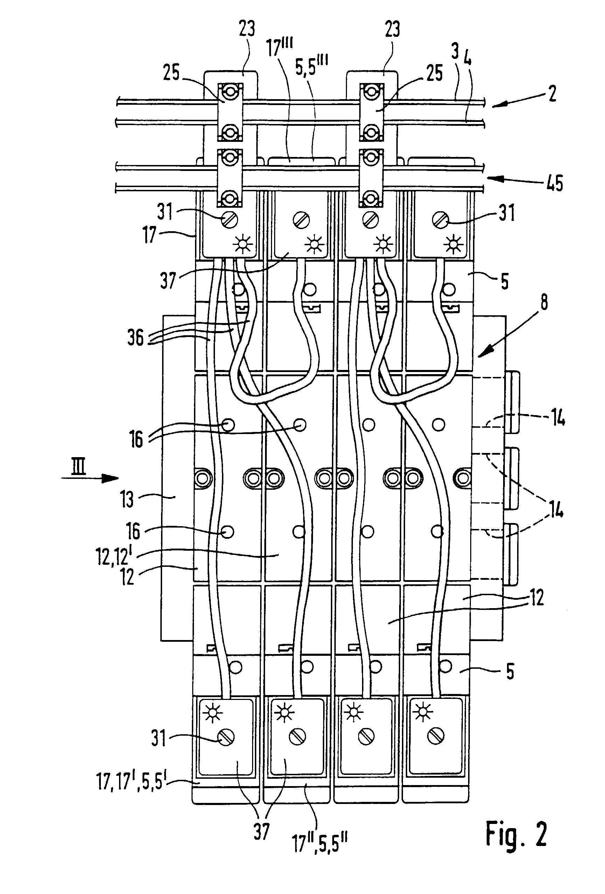

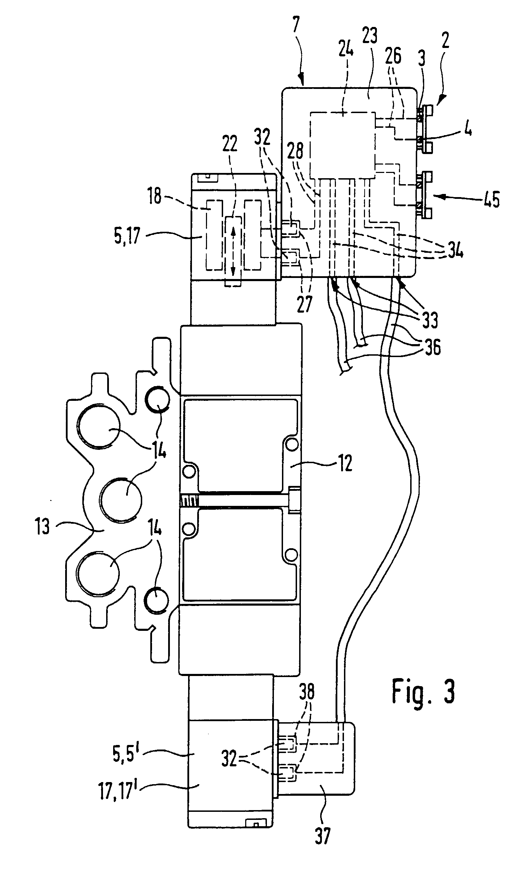

Vorab sei bemerkt, daß die in der Anlage gemäß Fig. 1 vorhandenen verschiedenen Einheiten in beliebiger Zusammenstellung verwendbar sind. Die mehreren Varianten dienen im vorliegenden Falle der Erläuterung der vielfältigen Ausführungsformen der Steuereinrichtung.

In Fig. 1 ist eine Anlage oder Einrichtung abgebildet, wie sie beispielsweise zur Steuerung einer Maschine in der Montage- oder Fertigungstechnik eingesetzt werden kann. Es ist eine zentrale Steuereinheit 1 vorhanden, die ein Steuerprogramm enthält, über das die Betriebsweise der einzelnen Komponenten der Anlage gesteuert wird. Vorzugsweise handelt es sich um eine speicherprogrammierbare Steuerung (SPS).

An die zentrale Steuereinheit 1 ist ein Feldbus 2 angeschlossen. Dieser entspricht vorliegend der sogenannten ASI-Spezifikation. Es handelt sich um einen 2-Leiter-Bus bzw. 2-Draht-Bus, bestehend aus zwei drahtförmigen Leitern 3, 4. Es kann sich wie vorliegend um einzelne Leiter handeln, aber auch um in einem gemeinsam isolierten Kabel integrierte Leiter. Die Übermittlung der Steuersignale erfolgt zweckmäßiger Weise in serieller übertragungstechnik.

Entlang des Feldbusses 2 sind mehrere Einheiten II, IV, V, VI angeschlossen, die jeweils einen oder mehrere Verbraucher 5 und/oder einen oder mehrere Sensoren 6 enthalten (vgl. Fig. 2 bis 7). Die zentrale Steuereinheit 1 übermittelt den Verbrauchern 5 über den Feldbus 2 gewisse Steuersignale, die die Verbraucher 5 zu gewissen Aktionen veranlassen. Andererseits erhält die zentrale Steuereinheit 1 über den Feldbus 2 von den Sensoren 6 stammende Steuersignale, die die Signalausgabe beeinflussen. Auf diese Weise liegt eine integrierte Steuerung vor.

Die erfindungsgemäße Steuereinrichtung 7 wird in vorteilhafter Weise bei der Obermittlung von Steuersignalen zwischen dem Feldbus 2 und wenigstens einem Verbraucher und/oder Sensor eingesetzt. Sie eignet sich also für die Signalübermittlung in beiden Übermittlungsrichtungen. Bevorzugte Bauformen geben die Fig. 2 bis 7 wieder. Zunächst sei Bezug genommen auf die Ausführungsform gemäß Fig. 2 und 3. Hier ist eine Ventilbaugruppe 8 gezeigt, die mehrere längsseits aneinander angrenzend aufeinanderfolgend angeordnete Steuerventile 12 umfaßt. Beim Ausführungsbeispiel sind vier Steuerventile 12 vorhanden. Die Steuerventile 12 sind auf einem platten- oder leistenförmigen Fluidverteiler 13 befestigt.

Der Fluidverteiler 13 ist längs von mehreren Fluidkanälen 14 durchzogen. Diese münden in an sich bekannter Weise in gewissem Muster an der Bestückungsfläche des Fluidverteilers 13, auf der die Steuerventile 12 sitzen. Über einen oder mehrere der Fluidkanäle 14 erfolgt eine zentrale Druckmittelzufuhr, andere der Fluidkanäle 14 können zur Abluftführung dienen, und wieder andere der Fluidkanäle 14 können Vorsteuer-Druckmedium enthalten. Der Aufbau kann beispielsweise demjenigen entsprechen, wie er in der DE 42 30 414 Al beschrieben ist.

Die Steuerventile 12 steuern die Zufuhr und Abfuhr von insbesondere pneumatischem Druckmedium zu beliebigen Arbeitseinheiten 15, wie sie exemplarisch in Fig. 4 und 6 dargestellt sind. Hierbei handelt es sich beispielsweise um fluidbetätigte Linearantriebe bzw. Arbeitszylinder. An den Steuerventilen 12 sind Öffnungen 16 vorgesehen, an denen zu den Arbeitseinheiten 15 führende, in der Zeichnung nicht näher dargestellte Druckmittelleitungen anschließbar sind. Ein in den Steuerventilen 12 angeordneter Ventilschieber bestimmt durch seine jeweilige Stellung die Strömungsrichtung des Druckmediums und damit das Betriebsverhalten der angeschlossenen Arbeitseinheit.

Die jeweilige Schaltstellung des Ventilschiebers eines jeweiligen Steuerventils 12 wird durch einen oder mehrere elektrisch betätigbare Ventilantriebe 17 vorgegeben. Die Steuerventile. gemäß Fig. 2 und 3 verfügen jeweils über zwei Ventilantriebe 17, die z.B. im Bereich der einander entgegengesetzten Stirnseiten des Steuerventils 12 angesetzt sind. Die Ventilantriebe 17 des Ausführungsbeispiels sind Elektromagneteinrichtungen, die in an sich bekannter Weise eine Magnetspule 18 und einen beweglichen Magnetanker 22 enthalten. Der Magnetspule 18 zugeführte elektrische Steuersignale beeinflussen die Stellung des Magnetankers 22 und dadurch die Beaufschlagung des Ventilschiebers mit Druckmittel aus den Vorsteuerkanälen 14. Entsprechend der gewählten Druckbeaufschlagung ergibt sich eine bestimmte Schaltstellung des Ventilschiebers.

Bei den gezeigten Ausführungsbeispielen sind die oben erwähnten Verbraucher 5 von den Ventilantrieben 17 gebildet.

Die Steuereinrichtung 7 gemäß Fig. 2 und 3 umfaßt ein vorzugsweise blockartig gestaltetes Steuermodul 23. Im Innern dieses Steuermoduls 23 befindet sich eine Bus-Kommunikationseinheit 24, die vorliegend als ASI-Busstation konzipiert ist. An einer Außenseite des Steuermoduls 23 sind Anschlußmittel 25 geeigneter Art vorhanden, die ein lösbares Anschließen der Leiter 3, 4 des Feldbusses 2 ermöglichen. Die angeschlossenen Leiter 3, 4 stehen über erste interne Leiter 26 in elektrischer Verbindung mit der Bus-Kommunikationseinheit 24. An anderer Stelle im Bereich der Außenseite des Steuermoduls 23 befindet sich eine elektrische Kontakteinrichtung 27. Ober zweite interne Leiter 28 kommuniziert auch diese mit der Bus-Kommunikationseinheit 24.

Das Steuermodul 23 ist unmittelbar auf einem der Ventilantriebe 17 montiert. Eine entsprechende Befestigungsschraube ist bei 31 angedeutet. Die elektrische Kontakteinrichtung 27 steht dabei in elektrischer Verbindung mit an dem zugeordneten Ventilantrieb 17 vorgesehenen Kontaktmitteln 32, die über interne Leiter des Ventilantriebes 17 mit dessen Magnetspule 18 verbunden sind.

Auf diese Weise ist die Bus-Kommunikationseinheit 24 in die elektrische Verbindung zwischen dem Feldbus 2 und dem Verbraucher 5 zwischengeschaltet.

Im Betrieb der Anordnung liest die Bus-Kommunikationseinheit 24 die durch den Feldbus 2 geschickten Signale. Sowie ein an die betreffende Bus-Kommunikationseinheit 24 adressiertes Steuersignal ankommt, veranlaßt die Bus-Kommunikationseinheit 24 die entsprechende Aktion, beispielsweise das Anziehen des Magnetankers 22 zum Verschieben des Ventilgliedes. Das Steuermodul verfügt 23 nicht nur über die elektrische Kontakteinrichtung 27 als Signalausgang. Es sind darüber hinaus weitere Signalausgänge 33 an dem Steuermodul 23 vorgesehen. Das beispielsgemäße Steuermodul 23 verfügt über drei solcher zusätzlicher Signalausgänge 33, so daß, unter Einbeziehung der elektrischen Kontakteinrichtung 27, das Steuermodul 23 mit insgesamt vier Signalausgängen ausgestattet ist.

Die drei zusätzlichen Signalausgänge 33 sind unabhängig voneinander über dritte interne Leiter 34 an die Bus-Kommunikationseinheit 24 elektrisch angeschlossen. Außerdem steht jeder dieser zusätzlichen Signalausgänge 33 mit einem weiteren Verbraucher 5', 5'', 5''' in elektrischer Verbindung. Hierbei handelt es sich wiederum um Ventilantriebe 17', 17'', 17'''.

Der eine Ventilantrieb 17' sitzt an dem gleichen Steuerventil 12, an dem uch der das Steuermodul 23 tragende erste Ventilantrieb 17 sitzt. Die beiden anderen Ventilantriebe 17'', 17''' befinden sich vorliegend in entsprechender Weise an einem der anderen Steuerventile 12'. Auf diese Weise ist das Steuermodul 23 gleichzeitig für die Ansteuerung mehrerer Ventilantriebe 17 wie auch mehrerer Steuerventile 12 zuständig.

Die an die zugeordnete Bus-Kommunikationseinheit 24 adressierten, über den Feldbus 2 von der zentralen Steuereinheit 1 kommenden Steuersignale enthalten die für die Aktivierung der angeschlossenen Verbraucher 5, 5', 5'', 5''' erforderlichen Informationen. Diese werden von der Bus-Kommunikationseinheit 24 ausgewertet, und entsprechend erfolgt die Betätigung der angeschlossenen Verbraucher.

Wesentlich ist hierbei, daß mehreren Verbrauchern 5 eine gemeinsame Bus-Kommunikationseinheit 24 zugeordnet ist, die sich in einem Steuermodul 23 befindet, das seinerseits direkt an einem der Verbraucher 17 angebracht ist.

Eine vergleichbare Anordnung ist auch im Zusammenhang mit Sensoren möglich, was durch die Fig. 6 gut illustriert wird. Hier erkennt man zwei der oben bereits erwähnten Arbeitseinheiten 15, an denen jeweils ein Sensor 6 angebracht sind, die auf eine gewisse Stellung eines im Gehäuse der Arbeitseinheiten 15 angeordneten Kolbens ansprechen.

Die beispielsgemäßen Sensoren 6 sind sogenannte Reed-Sensoren, ebensogut könnte es sich um Sensoren anderer Art handeln, wie z.B. induktive, magnetoresistive oder magnetostriktive Sensoren. Im übrigen soll der Begriff "Sensoren" jegliche Einrichtungen umfassen, die einen Betriebsparameter messen.

Das Steuermodul 23 ist an einem der Sensoren 6 montiert. Die an ihr vorgesehene elektrische Kontakteinrichtung 27 steht mit der Sensoreinrichtung im Innern des Sensors 6 in elektrischer Verbindung. Hier bildet die elektrische Kontakteinrichtung 27 einen Signaleingang, indem über sie von dem Sensor 6 stammende Signale eingespeist werden, die die angeschlossene Bus-Kommunikationseinheit 24 bei entsprechender Ansteuerung an den Feldbus 2 übermittelt, von wo sie zu der zentralen Steuereinheit 1 gelangen.

Das Steuermodul 23 verfügt hier zusätzlich über drei weitere Signaleingänge 35. Jeder dieser Signaleingänge 35 ist an einen weiteren Sensor 6', 6'', 6''' angeschlossen. Der eine Sensor 6' befindet sich an der gleichen Arbeitseinheit 15 wie der das Steuermodul 23 tragende Sensor 6. Die beiden anderen angeschlossenen Sensoren 6'', 6''' befinden sich an wenigstens einer weiteren Arbeitseinheit 15'. Somit gehen bei der Bus-Kommunikationseinheit 24 die Steuersignale mehrerer voneinander unabhängiger Sensoren ein und werden anschließend über den Feldbus 2 der zentralen Steuereinheit 1 zugeführt.

Die Fig. 4 zeigt eine Mischanordnung, bei der an dem Steuermodul 23 sowohl Signaleingänge als auch Signalausgänge vorhanden sind. Das Steuermodul 23 sitzt auf einem Verbraucher 5, so daß die mit diesem verbundene Kontakteinrichtung 27 als Signalausgang fungiert. Ober einen weiteren Signalausgang 33 ist ein zweiter Verbraucher 5' in Gestalt eines weiteren Ventilantriebes 17' angeschlossen. Darüber hinaus sind zwei weitere Signaleingänge 35 vorhanden, die mit zwei Sensoren 6, 6' verbunden sind, die an einer Arbeitseinheit 15 angeordnet sind.

Selbstverständlich wäre es auch möglich, ein Steuermodul 23 mit gemischter Anordnung von Signaleingängen und Signalausgängen unmittelbar an einem Sensor zu plazieren und von dort aus einen weiteren Sensor sowie weitere Verbraucher anzusteuern.

Die bei allen Ausführungsbeispielen vorhandene Gesamtanzahl von vier Stück an Signalausgängen 33 und Signaleingängen 35 erweist sich als besonders vorteilhaft, weil bei geringem Aufwand besonders flexibel. Es wäre allerdings denkbar, eine andere Gesamtanzahl vorzusehen, wobei auch das zahlenmäßige Verhältnis zwischen Signalausgängen und Signaleingängen nach Bedarf variieren könnte.

Im Falle der in Fig. 2 und 3 gezeigten Einheit II sind die Steuerventile 12 paarweise an ein gemeinsames Steuermodul 23 angeschlossen. Bei der vorhandenen Vierzahl von Steuerventilen 12 sind daher zwei Steuermodule 23 vorhanden.

Die elektrische Verbindung zwischen den an dem Steuermodul 23 vorhandenen weiteren Signalausgängen 33 oder Signaleingängen 35 mit dem jeweils zugeordneten Verbraucher 5 oder Sensor 6 erfolgt zweckmäßigerweise unter Vermittlung flexibler elektrischer Leiter 36. Beim Ausführungsbeispiel handelt es sich um Kabel mit jeweils einem oder mehreren internen Drähten, die von einem Isolationsmantel umgeben sind. Kabel dieser Art sind sehr kostengünstig und lassen sich vom Anwender selbst problemlos auf die gewünschte Länge zuschneiden. Am verbraucherseitigen bzw. sensorseitigen Ende der elektrischen Leiter 36 ist vorzugsweise jeweils ein Anschlußteil 37 angebracht. Dieses Anschlußteil 37 wird lösbar an dem betreffenden Verbraucher 5 bzw. Sensor 6 angebracht. Eine an ihm angeordnete Kontakteinrichtung 38 steht im an einen Verbraucher 5 bzw. Sensor 6 angesetzten Zustand mit den an diesem vorgesehenen Kontaktmitteln 32 in elektrischer Verbindung, die ihrerseits mit der internen Einrichtung des zugeordneten Verbrauchers oder Sensors verbunden sind.

Somit lassen sich die in Fig. 2 bis 4 und 6 abgebildeten Steuereinrichtungen 7 nach Bedarf sehr einfach montieren und demontieren. Abgesehen vom Anschluß des Feldbusses 2 ist lediglich ein Anbringen des Steuermoduls 23 sowie der drei Anschlußteile 37 erforderlich.

Um diesen Anschlußvorgang zu erleichtern, sind sowohl das Steuermodul 23 als auch die Anschlußteile 37 vorzugsweise als Steckerteile ausgebildet. Das Ansetzen ist also ein Steckvorgang. Die elektrische Kontakteinrichtung 27, die elektrische Kontaktanordnung 38 sowie die Kontaktmittel 32 sind hierbei als Steckkontakte ausgeführt, die zu Mehrfachsteckeinrichtungen bzw. Multipol-Steckverbindungen zusammengefaßt sein können.

Wie schon bei dem Steuermodul 23 empfiehlt sich auch bei den Anschlußteilen 37 eine zusätzliche Fixierung an dem sie tragenden Element 5, 6 mittels Befestigungsschrauben 31.

Während die elektrischen Leiter 36 bei den bisher beschriebenen Ausführungsbeispielen fest mit dem Steuermodul 23 verdrahtet sind, zeigt die Fig. 5 eine Bauform, die ein lösbares Ankuppeln der betreffenden Leiter 36 ermöglicht. Die beiden hier zusätzlich vorhandenen Signaleingänge 35 sind jeweils mit einer Kupplungseinrichtung 42 versehen. Bei dieser handelt es sich vorzugsweise um eine Steckkupplungseinrichtung. Die nicht näher dargestellten elektrischen Leiter 36 können so nach Bedarf in einem raschen Arbeitsgang angeschlossen oder entfernt werden.

Entsprechende Kupplungseinrichtungen 42 sind natürlich auch bei Signalausgängen 33 möglich.

Im Falle der Fig. 5 ist das Steuerventil 12 ein monostabiles Ventil, so daß ein Ventilantrieb 17 zur Betätigung ausreicht. Auf diesem sitzt das Steuermodul 23. An die beiden unbelegt gezeigten Signaleingänge 35 können bei Bedarf von Sensoren kommende elektrische Leiter lösbar angeschlossen werden.

In Fig. 7 ist eine Bauform gezeigt, bei der das Steuermodul 23 und ein Anschlußteil 37 starr miteinander verbunden sind. Die starre Verbindung erfolgt über ein z.B. stegartiges Oberbrückungsglied 43, das mit den Gehäusen des Anschlußteils 37 und des Steuermoduls 23 einstückig ausgebildet sein kann. Die zwischen dem Anschlußteil 37 und dem Steuermodul 23 verlaufenden elektrischen Leiter 36 erstrecken sich im Innern des Überbrückungsgliedes 43 und sind dadurch gut geschützt. Da keine Flexibilität verlangt wird, können sie in Gestalt von Leiterbahnen an einer oder mehreren Leiterplatten vorgesehen sein, die im Innern der sich aus dem Steuermodul 23, dem Oberbrückungsglied 43 und dem Anschlußteil 37 zusammensetzenden Baueinheit 44 aufgenommen sind. Diese Baueinheit 44 bildet somit insgesamt praktisch eine Mehrfachsteckvorrichtung, die sich in einem einzigen Montagevorgang an die zugeordneten Verbraucher 5 bzw. Sensoren 6 ansetzen läßt. Derartige Anordnungen empfehlen sich für spezielle Lösungen mit großer Stückzahl, die keinerlei Anschlußvariation erfordern.

Die beispielsgemäße Steuereinrichtung 7 läßt sich im Zusammenhang mit allen Aktoren betreiben, die von elektromagnetischen Elementen angesteuert werden. Sie eignet sich für Verbraucher 5 und Sensoren 6 unterschiedlicher Art und Größe, wobei ohne weiteres an ein und dieselbe Steuereinrichtung 7 unterschiedliche Verbraucher- oder Sensortypen angeschlossen werden können.

Da in einer Anlage, wie sie z.B. in Fig. 1 schematisch beispielhaft angedeutet ist, eine verhältnismäßig geringe Anzahl von Punkten mit dem Feldbus 2 angefahren werden muß, gestaltet sich die Installation sehr einfach. Die einzelnen Steuermodule 23 können variabel an verschiedenen Stellen entlang des Feldbusses an diesen angeschlossen werden. Querverzweigungen zu den nicht unmittelbar an den Steuermodulen 23 angeordneten Verbrauchern 5 bzw. Sensoren 6 lassen sich über die elektrischen Leiter 36 und die Anschlußteile 37 durchführen, wobei letztere einfachster Bauart sein können und insbesondere keine eigene Bus-Kommunikationseinheit benötigen.

In Fig. 2 und 3 ist bei 45 noch ein Not-Aus-Strang abgebildet, der optional vorgesehen sein kann, um im Notfall einzelne Aktoren abzuschalten. In diesem Falle sollte die Betriebsenergie allerdings nicht über den Feldbus 2, sondern getrennt von diesem über den Not-Aus-Strang zugeführt werden.

Die als Kabel ausgebildeten elektrischen Leiter 36 können als Spiralkabel ausgeführt sein, um bei einfacher Handhabung eine variable Längenanpassung vornehmen zu können.

## Patentansprüche

1. Steuereinrichtung zur Verwendung bei der Übermittlung von Steuersignalen zwischen einem Feldbus (2) und wenigstens einem Verbraucher (5) und/oder Sensor (6), insbesondere zur Ansteuerung von Ventilen (12), mit einem Steuermodul (23), das eine Bus-Kommunikationseinheit (24) sowie zu deren Anschluß an einen Feldbus (2) dienende Anschlußmittel (25) aufweist, und das derart mit wenigstens einem Verbraucher (5) und/oder Sensor (6) verbindbar ist, daß die Bus-Kommunikationseinheit (24) über eine an dem Steuermodul (23) vorgesehene Kontakteinrichtung (27) elektrisch mit dem Verbraucher (5) und/oder Sensor (6) gekoppelt ist, und mit mindestens einem zusätzlichen, mit der Bus-Kommunikationseinheit (24) des Steuermoduls (23) verbundenen Signalausgang (33) zum Ankoppeln wenigstens eines weiteren Verbrauchers (5', 5'', 5'''), dadurch gekennzeichnet, daß das Steuermodul (23) derart ausgebildet ist, daß es zum Anschließen seiner Kontakteinrichtung (27) direkt an dem wenigstens einen Verbraucher (5) und/oder Sensor (6) angebracht ist, und daß der mindestens eine zusätzliche Signalausgang (33) zusätzlich zu der Kontakteinrichtung (27) und den Anschlußmitteln (25) für den Feldbus (2) an dem Steuermodul (23) vorgesehen ist.

2. Steuereinrichtung nach Anspruch 1, dadurch gekennzeichnet, daß an dem Steuermodul (23) zusätzlich mindestens ein Signaleingang (35) zum Ankoppeln wenigstens eines Sensors (6', 6'', 6''') vorgesehen ist.

3. Steuereinrichtung nach Anspruch 1 oder 2, dadurch gekennzeichnet, daß das Steuermodul (23) ein Steckerteil ist.

4. Steuereinrichtung nach einem der Ansprüche 1 bis 3, dadurch gekennzeichnet, daß mindestens ein Signaleingang (35) und/oder Signalausgang (33) über elektrische Leiter (36) mit einem außerhalb des Steuermoduls (23) angeordneten Anschlußteil (47) verbunden ist, das an einen weiteren Verbraucher (5', 5'', 5''') und/oder Sensor (6', 6'', 6''') anschließbar ist, um diesen mit der Bus-Kommunikationseinheit (24) elektrisch zu koppeln.

5. Steuereinrichtung nach Anspruch 4, dadurch gekennzeichnet, daß sämtliche an dem Steuermodul (23) vorhandenen Signalausgänge (33) und/oder Signaleingänge (35) mit jeweils einem externen Anschlußteil (37) verbunden sind.

6. Steuereinrichtung nach Anspruch 4 oder 5, dadurch gekennzeichnet, daß die zu einem jeweiligen Anschlußteil (37) führenden elektrischen Leiter (36) als flexible Leiter ausgeführt sind, insbesondere in Gestalt von Kabeln.

7. Steuereinrichtung nach einem der Ansprüche 4 bis 6, dadurch gekennzeichnet, daß mindestens ein Anschlußteil (37) starr mit dem Steuermodul (23) verbunden ist.

8. Steuereinrichtung nach einem der Ansprüche 4 bis 7, dadurch gekennzeichnet, daß das Anschlußteil (37) ein Steckerteil ist.

9. Steuereinrichtung nach einem der Ansprüche 1 bis 8, dadurch gekennzeichnet, daß an wenigstens einem Signaleingang (35) und/oder Signalausgang (33) eine Kupplungseinrichtung (42) zum lösbaren Ankuppeln der zu einem Verbraucher (5', 5'', 5''') und/oder Sensor (6', 6'', 6''') führenden elektrischen Leiter (36) vorgesehen ist.

10. Steuereinrichtung nach Anspruch 9, dadurch gekennzeichnet, daß die Kupplungseinrichtung (42) eine Steckkupplungseinrichtung ist.

11. Steuereinrichtung nach einem der Ansprüche 1 bis 10, dadurch gekennzeichnet, daß die Bus-Kommunikationseinheit (24) eine ASI-Busstation für einen ASI-Bus ist.

12. Steuereinrichtung nach einem der Ansprüche 1 bis 11, dadurch gekennzeichnet, daß mindestens ein Verbraucher (5) von einem elektrisch betätigten Ventilantrieb (17), beispielsweise einer Elektromagneteinrichtung, gebildet ist.

13. Steuereinrichtung nach Anspruch 12, dadurch gekennzeichnet, daß mehrere, mit jeweils mindestens einem Ventilantrieb (17) versehene Steuerventile (12) zu einer oder mehreren Baugruppen (8) zusammengefaßt sind.

14. Steuereinrichtung nach einem der Ansprüche 1 bis 13, dadurch gekennzeichnet, daß mindestens ein Sensor (6, 6') einem Linearantrieb (15, 15') zugeordnet ist, beispielsweise einem fluidbetätigten Arbeitszylinder.

15. Steuereinrichtung nach einem der Ansprüche 1 bis 14, dadurch gekennzeichnet, daß das Steuermodul (23) zusätzlich zu der Kontakteinrichtung (27) über jeweils mindestens einen Signaleingang (35) und einen Signalausgang (33) verfügt.

16. Steuereinrichtung nach einem der Ansprüche 1 bis 15, dadurch gekennzeichnet, daß mehrere Steurermodule (23) vorhanden sind, die variabel an verschiedenen Stellen entlang des Feldbusses (2) an diesen anschließbar sind.

## Claims

1. Control unit for use in the transmission of control signals between a field bus (2) and one or more loads (5) and/or sensors (6), in particular for the control of valves (12), with a control module (23) which has a bus communication unit (24) together with means of connection (25) for coupling to a field bus (2), and which is connectable with one or more loads (5) and/or sensors (6) in such a way that the bus communication unit (24) is coupled electrically to the one or more loads (5) and/or sensors (6) via a contact device (27) provided on the control module (23), and with an additional signal output (33) connected to the bus communication unit (24) of the control module (23) for the coupling of one or more further loads (5', 5'', 5'''), characterized in that the control module (23) is designed in such a way that, in order to connect its contact device (27) it is attached directly to the one or more loads (5) and/or sensors (6), and that the one or more further signal outputs (33) is provided on the control module (23) in addition to the contact device (27) and the means of connection (25) for the field bus (2).

2. Control unit according to claim 1, characterized in that one or more additional signal inputs (35) is provided on the control module (23) for the coupling of one or more sensors (6', 6'', 6''').

3. Control unit according to claim 1 or 2, characterized in that the control module (23) is a plug-in component.

4. Control unit according to any of claims 1 to 3, characterized in that at least one signal input (35) and/or signal output (33) is coupled via electrical conductors (36) to a connection element (47) mounted outside the control module (23), which is connectable to a further load (5', 5'', 5''') and/or sensor (6', 6'', 6'''), in order to couple the latter electrically to the bus communication unit (24).

5. Control unit according to claim 4, characterized in that all signal outputs (33) and/or signal inputs (35) present at the control module (23) are each coupled to an external connection element (37).

6. Control unit according to claim 4 or 5, characterized in that the electrical conductors (36) leading to each connection element (37) are designed as flexible conductors, in particular in the form of cables.

7. Control unit according to any of claims 4 to 6, characterized in that one or more of the connection elements (37) is rigidly coupled to the control module (23).

8. Control unit according to any of claims 4 to 7, characterized in that the connection element (37) is a plug-in component.

9. Control unit according to any of claims 1 to 8, characterized in that, at one or more signal inputs (35) and/or signal outputs (33) there is provided a coupling device (42) for releasable coupling of the electrical conductor (36) leading to a load (5', 5'', 5''') and/or sensor (6', 6'', 6''').

10. Control unit according to claim 9, characterized in that the coupling device (42) is a plug connector.

11. Control unit according to any of claims 1 to 10, characterized in that the bus communication unit (24) is an ASI bus station for an ASI bus.

12. Control unit according to any of claims 1 to 11, characterized in that one or more loads (5) is formed by an electrically-triggered valve actuator (17), for example an electromagnetic device.

13. Control unit according to claim 12, characterized in that several control valves (12), each provided with one or more valve actuators (17), are combined to form one or more sub-assemblies (8).

14. Control unit according to any of claims 1 to 13, characterized in that one or more sensors (6, 6') is assigned a linear drive (15, 15'), for example a fluid-actuated operating cylinder.

15. Control unit according to any of claims 1 to 14, characterized in that, in addition to the contact device (27), the control module (23) has one or more signal inputs (35) and signal outputs (33).

16. Control unit according to any of claims 1 to 15, characterized in that there are several control modules (23), which may be variably connected to the field bus (2) at different points along it.

## Revendications

1. Dispositif de commande destiné à être utilisé lors de la transmission de signaux de commande entre un bus de champ (2) et au moins un récepteur (5) et/ou capteur (6), en particulier pour la commande de soupapes (12), comportant un module de commande (23) qui présente une unité de communication par bus (24) ainsi que des moyens de branchement (25), servant à son branchement à un bus de champ (2), et qui peut être relié avec au moins un récepteur (5) et/ou capteur (6) de manière que l'unité de communication par bus (24) soit accouplée électriquement avec le récepteur (5) et/ou le capteur (6), par un dispositif de contact (27) prévu sur le module de commande (23), et comportant au moins une sortie de signaux (33) supplémentaire, reliée à l'unité de communication par bus (24) du module de commande (23), en vue de l'accouplement d'au moins un récepteur (5', 5'', 5''') supplémentaire, caractérisé en ce que le module de commande (23) est conçu de manière à être monté directement sur le ou les récepteur(s) (5) et/ou capteur(s) (6), pour le raccordement de son dispositif de contact (27), et en ce que la ou les sortie(s) de signaux (33) supplémentaire(s) est (sont) prévue(s) sur le module de commande (23) en supplément au dispositif de contact (27) et aux moyens de branchement (25) pour le bus de champ (2).

2. Dispositif de commande selon la revendication 1, caractérisé en ce que sur le module de commande (23) est prévue en supplément au moins une entrée de signaux (35), pour l'accouplement d'au moins un capteur (6', 6'', 6''').

3. Dispositif de commande selon la revendication 1 ou 2, caractérisé en ce que le module de commande (23) est un élément formant connecteur.

4. Dispositif de commande selon l'une des revendications 1 à 3, caractérisé en ce qu'au moins une entrée de signaux (35) et/ou une sortie de signaux (33) est reliée, par des conducteurs électriques (36), avec une partie de branchement (47) disposée à l'extérieur du module de commande (23), qui peut être raccordée à un autre récepteur (5', 5'', 5''') et/ou capteur (6', 6'', 6'''), afin d'accoupler électriquement celui-ci à l'unité de communication par bus (24).

5. Dispositif de commande selon la revendication 4, caractérisé en ce que toutes les sorties de signaux et/ou entrées de signaux (35), se trouvant sur le module de commande (23), sont reliées chacune à une partie de branchement (37) externe.

6. Dispositif de commande selon la revendication 4 ou 5, caractérisé en ce que les conducteurs électriques (36), menant à une partie de branchement (37) respective, sont réalisés en tant que conducteurs flexibles, en particulier sous la forme de câbles.

7. Dispositif de commande selon l'une des revendications 4 à 6, caractérisé en ce qu'au moins une partie de branchement (37) est reliée rigidement au module de commande (23).

8. Dispositif de commande selon l'une des revendications 4 à 7, caractérisé en ce que la partie de branchement (37) est un élément à connecteur.

9. Dispositif de commande selon l'une des revendications 1 à 8, caractérisé en ce que sur au moins une entrée de signaux (35) et/ou sortie de signaux (33), il est prévu en dispositif de couplage (42) pour l'accouplement séparable des conducteurs électriques (36), menant à un récepteur (5', 5'', 5''') et/ou capteur (6', 6'', 6''').

10. Dispositif de commande selon la revendication 9, caractérisé en ce que le dispositif de couplage (42) est un dispositif de couplage à enfichage.

11. Dispositif de commande selon l'une des revendications 1 à 10, caractérisé en ce que l'unité de communication par bus (24) est un poste de bus ASI pour un bus ASI.

12. Dispositif de commande selon l'une des revendications 1 à 11, caractérisé en ce qu'au moins un récepteur (5) est constitué par un dispositif d'actionnement de soupape (17), actionné électriquement, par exemple un dispositif électromagnétique.

13. Dispositif de commande selon la revendication 12, caractérisé en ce que plusieurs soupapes de commande (12), pourvues chacune d'au moins un dispositif d'actionnement de soupape (17), sont réunies en un ou plusieurs ensembles (8).

14. Dispositif de commande selon l'une des revendications 1 à 13, caractérisé en ce qu'au moins un capteur (6, 6') est associé à un dispositif d'entraînement linéaire (15, 15'), par exemple à un vérin actionné au moyen d'un fluide.

15. Dispositif de commande selon l'une des revendications 1 à 14, caractérisé en ce que le module de commande (23) dispose, en supplément au dispositif de contact (27), d'au moins une entrée de signaux (35) et une sortie de signaux (33).

16. Dispositif de commande selon l'une des revendications 1 à 15, caractérisé en ce que sont prévus plusieurs modules de commande (23), qui peuvent être raccordés de manière variable au bus de champ (2), en différents points, le long de celui-ci.
